# EUROPÄISCHE PATENTANMELDUNG

(11) **EP 4 552 963 A1**
(43) Veröffentlichungstag der Anmeldung: **14.05.2025**
(21) Anmeldenummer: 24212020.2
(22) Anmeldetag: 11.11.2024
(51) Int. Cl.: B62M 6/55, B62M 11/14, B62M 11/18

(54) **TRETLAGERGETRIEBE IN PLANETENBAUWEISE FÜR EIN FAHRRAD ODER EIN PEDELEC**

(30) Priorität: 13.11.2023 DE 102023211231
(71) Anmelder: ZF Friedrichshafen AG, 88046 Friedrichshafen (DE)
(72) Erfinder: Beck, Stefan, 88097 Eriskirch (DE); Wechs, Michael, 88138 Weißensberg (DE); Kutter, Fabian, 88079 Kressbronn (DE); Martin, Thomas, 88138 Weissensberg (DE); Riedisser, Thomas, 88138 Sigmarszell (DE)
(74) Vertreter: ZF Friedrichshafen AG

(57) **Zusammenfassung**

Es wird ein Tretlagergetriebe in Planetenbauweise für ein Fahrrad oder ein Pedelec (1), mit einer Tretkurbelwelle (WAn) als Antrieb und einer Getriebeausgangswelle (WAb) als Abtrieb und mit weiteren Wellen (W1, W2, W3, W4, W5, W6, W7) sowie mit einer ersten Getriebeschaltgruppe (3) und einer zweiten Getriebeschaltgruppe (4) vorgeschlagen, die zum Realisieren von mehreren Gängen (G1, G2, G3, G4, G5, G6, G7, G8, G9, G10, G11, G12) miteinander gekoppelt sind, wobei die erste Getriebeschaltgruppe (3) einen zweistufigen Stufenplanetenradsatz (StRS) umfasst, dem ein erstes Schaltelement Schaltelemente (B1), ein zweites Schaltelement (B2) und ein fünftes Schaltelement (F1^{I}, F1^{II}, F1^{III}, F1^{IV}, F1^{V}, F1^{VI}) zugeordnet sind. Ferner wird ein Fahrrad oder Pedelec (1) mit einem Tretlagergetriebe vorgeschlagen.

## Beschreibung

Die vorliegende Erfindung betrifft ein Tretlagergetriebe in Planetenbauweise für ein Fahrrad oder ein Pedelec mit einer Getriebeeingangswelle bzw. Tretkurbelwelle als Antrieb und einer Getriebeausgangswelle als Abtrieb und mit weiteren Wellen sowie mit einer ersten Getriebeschaltgruppe mit einem Stufenplanetenradsatz und einer zweiten Getriebeschaltgruppe mit einem ersten Planetenradsatzes und einem zweiten Planetenradsatz, denen mehrere Schaltelemente zugeordnet sind. Ferner betrifft die Erfindung ein Fahrrad oder Pedelec mit dem Tretlagergetriebe.

Beispielsweise aus der Druckschrift DE 10 2022 203 243 B3 ist ein Getriebe in einem Tretkurbelgehäuse für ein Fahrrad oder Pedelec bekannt. Das Getriebe umfasst einen Stufenplanetenradsatzes und einen weiteren Planetenradsatz, welche koaxial zur Tretkurbelwelle angeordnet sind, denen sechs Schaltelemente zum Realisieren von sechs Gängen zugeordnet sind.

Der vorliegenden Erfindung liegt die Aufgabe zugrunde, ein Tretlagergetriebe und ein Fahrrad oder Pedelec mit dem Tretlagergetriebe vorzuschlagen, welche einen möglichst geringen Bauaufwand mit gegenüber dem Stand der Technik verbesserten Eigenschaften aufweisen.

Diese Aufgabe wird erfindungsgemäß durch die Merkmale des Patentanspruches 1 bzw. 13 gelöst. Vorteilhafte und beanspruchte Weiterbildungen ergeben sich aus den Unteransprüchen und der Beschreibung sowie den Zeichnungen.

Somit wird ein Tretlagergetriebe in Planetenbauweise für ein Fahrrad oder ein Pedelec vorgeschlagen. Das Tretlagergetriebe weist eine Tretkurbelwelle als Antrieb und eine Getriebeausgangswelle als Abtrieb sowie weitere Wellen auf, wobei der Abtrieb vorzugsweise über ein Kettenrad, ein Riemenrad oder dergleichen erfolgt. Ferner umfasst das Tretlagergetriebe eine erste Getriebeschaltgruppe und eine zweite Getriebeschaltgruppe, die zum Realisieren von mehreren Gängen miteinander gekoppelt sind, wobei die erste Getriebeschaltgruppe einen zweistufigen Stufenplanetenradsatz umfasst, dem ein erstes Schaltelement Schaltelemente, ein zweites Schaltelement und ein fünftes Schaltelement zugeordnet sind, wobei die zweite Getriebeschaltgruppe einen ersten Planetenradsatzes und einen zweiten Planetenradsatzes umfasst, denen ein drittes Schaltelement, ein viertes Schaltelement und einen sechste Schaltelement zugeordnet sind, wobei ein Stufenplanetenradträger als Element des Stufenplanetenradsatzes mit der Tretkurbelwelle oder mit einer sechsten Welle als Ausgangswelle der zweiten Getriebeschaltgruppe verbunden ist, wobei ein Hohlrad als Element des Stufenplanetenradsatzes mit einem zweiten Element des ersten Planetenradsatzes oder mit der Getriebeausgangswelle verbunden ist, wobei ein zweites Sonnenrad als Element des Stufenplanetenradsatzes über ein erstes Schaltelement an einem Gehäuse festsetzbar ist, wobei ein erstes Sonnenrad als Element des Stufenplanetenradsatzes über ein zweites Schaltelement an dem Gehäuse festsetzbar ist, wobei zum Verblocken des Stufenplanetenradsatzes zwei Elemente bzw. zwei mit Elementen verbundenen Wellen des Stufenplanetenradsatzes über ein fünftes Schaltelement miteinander verbindbar sind, wobei ein erstes Element des ersten Planetenradsatzes mit einem ersten Element des zweiten Planetenradsatzes verbunden ist, wobei das erste Element des ersten Planetenradsatzes und das erste Element des zweiten Planetenradsatzes gemeinsam mit dem Stufenplanetenradträger des Stufenplanetenradsatzes oder mit der Getriebeausgangswelle verbunden sind, wobei ein drittes Element des ersten Planetenradsatzes über ein drittes Schaltelement an dem Gehäuse festsetzbar ist, wobei ein drittes Element des zweiten Planetenradsatzes über ein viertes Schaltelement an dem Gehäuse festsetzbar ist, wobei das dritte Element des ersten Planetenradsatzes mit dem zweiten Element des zweiten Planetenradsatzes verbunden ist, und wobei zum Verblocken des ersten Planetenradsatzes und des zweiten Planetenradsatzes zwei mit Elementen des ersten Planetenradsatzes und des zweiten Planetenradsatzes verbundene Wellen über ein sechstes Schaltelement miteinander verbindbar sind.

Auf diese Weise wird mit der vorbeschriebenen Anbindung der ersten Getriebeschaltgruppe und der zweiten Getriebeschaltgruppe bei dem vorgeschlagenen Tretlagergetriebe mit einem vorgesehenen Stufenplanetenradsatz und zwei Planetenradsätze sowie nur sechs vorgesehenen Schaltelementen ein besonders einfacher und kompakter Aufbau bei dem Tretlagergetriebe realisiert. Hinzu kommen besonders geringe Bauteilbelastungen und ein vorteilhaft hoher Verzahnungswirkungsgrad aufgrund der geometrischen Übersetzungsreihe bei dem Tretlagergetriebe gegenüber dem bekannten Getriebe.

Zur mechanischen Verbindung von Elementen, zum Beispiel Drehelementen oder dergleichen der beiden Planetenradsätze bei den beiden Getriebeschaltgruppen werden vorzugsweise neben Antrieb und Abtrieb weitere Wellen oder wellenartige Elemente verwendet, wobei unter dem Begriff Welle nicht ausschließlich ein zylindrisches, drehbar gelagertes Maschinenelement zur Übertragung von Drehmomenten zu verstehen ist, sondern vielmehr sind hierunter auch allgemeine Verbindungselemente zu verstehen, die die einzelnen Radsatzelemente miteinander zur Drehmomentübertragung verbinden.

Die axiale Reihenfolge der beiden Getriebeschaltgruppen kann bei dem vorgeschlagenen Tretlagergetriebe vertauscht werden. Demzufolge ist die erste Getriebeschaltgruppe zwischen der Getriebeeingangswelle bzw. der Tretkurbelwelle und der Getriebeausgangswelle des Tretlagergetriebes der zweiten Getriebeschaltgruppe vor- oder nachgeschaltet. Bei einer vorgeschalteten Anordnung der ersten Getriebeschaltgruppe bildet die mit der Tretkurbel verbundene Getriebeeingangs- bzw. Tretkurbelwelle des Tretlagergetriebes quasi die Eingangswelle der ersten Getriebeschaltgruppe und die fünfte Welle die Ausgangswelle der ersten Getriebeschaltgruppe und ist eingangsseitig mit der zweiten Getriebeschaltgruppe verbunden. Es ist möglich, dass die Tretkurbelwelle und die erste Welle einteilig oder auch mehrteilig ausgeführt sind. Bei einer nachgeschalteten Anordnung der ersten Getriebeschaltgruppe ist die Eingangswelle der ersten Getriebeschaltgruppe ausgangsseitig mit der zweiten Getriebeschaltgruppe verbunden und die fünfte Welle der ersten Getriebeschaltgruppe ist mit der Getriebeausgangswelle verbunden. Es ist möglich, dass die Getriebeausgangswelle und die fünfte Welle einteilig oder mehrteilig ausgeführt sind.

Bei dem vorgeschlagenen Tretlagergetriebe kann eine beliebig ausgeführte mehrstufige zweite Getriebeschaltgruppe mit der ersten Getriebeschaltgruppe als Tretlagetriebe kombiniert werden. Vorzugsweise kann die zweite Getriebeschaltgruppe als Dreiganggetriebe bzw. Dreiganggruppe und die erste Getriebeschaltgruppe als Dreiganggetriebe bzw. Dreiganggruppe ausgeführt sein, sodass beispielsweise ein Neunganggetriebe als Tretlagergetriebe realisiert wird. Es können jedoch auch andere Gangzahlen bei den Getriebeschaltgruppen realisiert werden, sodass das Tretlagergetriebe auch mehr oder weniger als z. B. acht Gänge realisieren kann. Je nach Randbedingungen und Anforderungen bei dem Tretlagergetriebe können Gänge auch weggelassen werden. Auf diese Weise kann der Radsatz auf die geforderten Übersetzungen (Gangsprünge, Spreizung usw.) oder auch auf die Art der Schaltungen, wie viele Schaltelemente beteiligt sind, optimiert werden.

Zur Anbindung der beiden Getriebeschaltgruppe kann im Detail zum Erreichen eines besonders einfachen und kompakten Aufbaus des Tretlagergetriebes vorgesehen sein, dass der Stufenplanetenradträger als Element des Stufenplanetenradsatzes mit der Tretkurbelwelle oder mit der sechsten Welle als Ausgangswelle der zweiten Getriebeschaltgruppe verbunden ist, dass das Hohlrad als Element des Stufenplanetenradsatzes über eine fünfte Welle mit dem zweiten Element des ersten Planetenradsatzes oder mit der Getriebeausgangswelle verbunden ist, dass das zweite Sonnenrad als Element des Stufenplanetenradsatzes über eine erste Welle bei geschlossenem ersten Schaltelement an einem Gehäuse festsetzbar ist, dass das erste Sonnenrad als Element des Stufenplanetenradsatzes über eine zweite Welle bei geschlossenem zweiten Schaltelement an dem Gehäuse festsetzbar ist, dass zum Verblocken des Stufenplanetenradsatzes zwei Elemente des Stufenplanetenradsatzes bei gesperrtem fünften Schaltelement miteinander verbindbar sind, dass das erste Element des ersten Planetenradsatzes mit dem ersten Element des zweiten Planetenradsatzes verbunden ist, dass das erste Element des ersten Planetenradsatzes und das erste Element des zweiten Planetenradsatzes gemeinsam mit dem Stufenplanetenradträger des Stufenplanetenradsatzes oder mit der Getriebeausgangswelle verbunden sind, dass das dritte Element des ersten Planetenradsatzes über eine dritte Welle bei geschlossenem dritten Schaltelement an dem Gehäuse festsetzbar ist, dass das dritte Element des zweiten Planetenradsatzes über eine vierte Welle bei geschlossenem vierten Schaltelement an dem Gehäuse festsetzbar ist, dass das dritte Element des ersten Planetenradsatzes über die dritte Welle mit dem zweiten Element des zweiten Planetenradsatzes verbunden ist, und dass zum Verblocken des ersten Planetenradsatzes und des zweiten Planetenradsatzes zwei mit Elementen des ersten Planetenradsatzes und des zweiten Planetenradsatzes verbundene Wellen bei gesperrtem sechsten Schaltelement miteinander verbindbar sind.

Demzufolge sind bei den beiden Getriebeschaltgruppen des vorgeschlagenen Tretlagergetriebes verschiedene Verblockungsvarianten des Stufenplanetenradsatzes über das fünfte Schaltelement in sechs verschiedenen Anordnungsvarianten sowie der beiden Planetenradsätze über das sechste Schaltelement in sechs verschiedenen Anordnungsvarianten möglich.

Im Rahmen der Erfindung ist bei dem vorgeschlagenen Tretlagergetriebe mit den beiden Getriebeschaltgruppen vorgesehen, dass die vorgesehenen Schaltelemente als Bremsen, Freilaufbremsen, Kupplungen und/oder Freiläufe ausgeführt sein können. Eine vorteilhafte Ausführungsvariante der Erfindung sieht vor, dass das erste Schaltelement, das zweite Schaltelement, das dritte Schaltelement und das vierte Schaltelement jeweils als formschlüssige Bremse ausgeführt sind, und/oder dass das fünfte Schaltelement und das sechste Schaltelement jeweils als Freilauf ausgeführt sind.

Die als Bremsen ausgeführten Schaltelemente werden vorzugsweise als formschlüssige Schaltelemente beispielsweise als kostengünstige Brems- bzw. Schaltklauen oder dergleichen zum Beispiel mit einem verzahnten Bremsring und einer korrespondierenden Schaltklinke ausgeführt. Bremsen als Schaltelemente haben den Vorteil, dass diese zum Betätigen von außen ohne weiteres erreichbar sind. Bei den als Freiläufe ausgeführten Kupplungen ist es von Vorteil, wenn die Bremsen z. B. als einseitig wirkende Bremsen ausgeführt sind, um ein Verblocken des Getriebes bei Drehrichtungsumkehr am Antrieb oder am Abtrieb zu verhindern. Vorzugsweise werden als Freiläufe nicht aktiv schaltbare bzw. betätigbare Freiläufe verwendet. Dies hat den Vorteil, dass keine Schaltbetätigung bei den passiven Schaltelementen erforderlich ist. Der nicht betätigbare Freilauf überträgt ein Drehmoment, wenn dieser im Sperrrichtungszustand sperrt. In der entgegengesetzten Drehrichtung wird kein Drehmoment übertragen, da der Freilauf im Überholtriebzustand nicht sperrt. Es ist jedoch denkbar, dass auch aktiv schaltbare Freiläufe oder auch aktiv schaltbare Freilaufbremsen eingesetzt werden.

Eine bevorzugte Ausführung der Erfindung kann vorsehen, dass zumindest einer der vorgesehenen Planetenradsätze als Minus-Planetenradsatz ausgeführt ist, wodurch sich eine besonders bauraumgünstige Anordnung ergibt. Es ist auch denkbar, dass einer der Planetenradsätze als Plus-Planetenradsatz ausgeführt ist.

Ein Minus-Planetenradsatz kann bevorzugt in einen Plus-Planetenradsatz überführt werden, wenn die Planetenradträger- und Hohlradanbindung an diesem Radsatz miteinander vertauscht wird und der Betrag der Standübersetzung um 1 erhöht wird. Ein Minus-Planetenradsatz weist an seinem Planetenradträger verdrehbar gelagerte Planetenräder auf, die mit dem Sonnenrad und dem Hohlrad dieses Planetenradsatzes kämmen, sodass sich das Hohlrad bei festgehaltenem Planetenradträger und drehendem Sonnenrad in zur Sonnenraddrehrichtung entgegengesetzter Richtung dreht. Ein Plus-Planetenradsatz weist an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, sodass sich das Hohlrad bei festgehaltenem Planetenradträger und drehendem Sonnenrad in zur Sonnenraddrehrichtung gleicher Drehrichtung dreht.

Dies bedeutet für den Fachmann, dass bei den als Minus-Planetenradsatz ausgeführten Einzelradsätzen ein erstes Element bzw. Radsatzelement als Sonnenrad, ein zweites Element als Planetenradträger bzw. Steg und ein drittes Element als Hohlrad ausgeführt sind. Ferner bedeutet dies, dass bei einem als Plus-Planetenradsatz ausgeführten Einzelradsatz das erste Element als Sonnenrad, das zweite Element als Hohlrad und das dritte Element als Planetenradträger bzw. Steg ausgeführt sind.

Um die Ansteuerung des vorgeschlagenen Tretlagergetriebes weiter zu optimieren, ist vorgesehen, dass zumindest ein Drehmomentsensor oder dergleichen an dem Antrieb und/oder an dem Abtrieb vorgesehen ist.

Um den Antrieb bei dem vorgeschlagenen Tretlagergetriebe elektrisch zu unterstützen, kann zumindest eine elektrische Maschine oder dergleichen mit dem Antrieb bzw. mit der Tretkurbelwelle oder Getriebeeingangswelle und/oder mit dem Abtrieb bzw. mit der Getriebeausgangswelle verbunden oder verbindbar sein bzw. fest oder lösbar angekoppelt sein. Vorzugsweise kann die elektrische Maschine achsparallel zur Tretkurbelwelle bzw. Getriebeeingangswelle angeordnet sein, während die Planetenradsätze koaxial zur Tretkurbelwelle bzw. Getriebeeingangswelle angeordnet sind.

Ein weiterer Aspekt der vorliegenden Erfindung beansprucht ein Fahrrad oder Pedelec mit dem vorbeschriebenen Tretlagergetriebe. Hieraus ergeben sich die bereits beschriebenen Vorteile und weitere Vorteile.

Nachfolgend wird die vorliegende Erfindung anhand der Zeichnungen weiter erläutert.

Es zeigen:
Figur 1 eine schematische Prinzipansicht eines erfindungsgemäßen Tretlagergetriebes an einem Fahrrad oder einem Pedelec mit einer einer zweiten Getriebeschaltgruppe mit zwei Planetenradsätzen mit einer ersten Verblockungsvariante vorgeschalteten ersten Getriebeschaltgruppe mit einem Stufenplanetenradsatz mit einer ersten Verblockungsvariante;
Figur 2 eine schematische Prinzipansicht des erfindungsgemäßen Tretlagergetriebes mit der der zweiten Getriebeschaltgruppe mit zwei Planetenradsätzen mit der ersten Verblockungsvariante nachgeschalteten ersten Getriebeschaltgruppe mit dem Stufenplanetenradsatz mit der ersten Verblockungsvariante;
Figur 3 eine schematische Prinzipansicht des erfindungsgemäßen Tretlagergetriebes mit der der zweiten Getriebeschaltgruppe mit zwei Planetenradsätzen mit der ersten Verblockungsvariante vorgeschalteten ersten Getriebeschaltgruppe mit dem Stufenplanetenradsatz mit einer zweiten Verblockungsvariante;
Figur 4 eine schematische Prinzipansicht des erfindungsgemäßen Tretlagergetriebes mit der der zweiten Getriebeschaltgruppe mit zwei Planetenradsätzen mit der ersten Verblockungsvariante vorgeschalteten ersten Getriebeschaltgruppe mit dem Stufenplanetenradsatz mit einer dritten Verblockungsvariante;
Figur 5 eine schematische Prinzipansicht des erfindungsgemäßen Tretlagergetriebes mit der der zweiten Getriebeschaltgruppe mit zwei Planetenradsätzen mit der ersten Verblockungsvariante vorgeschalteten ersten Getriebeschaltgruppe mit dem Stufenplanetenradsatz mit einer vierten Verblockungsvariante;
Figur 6 eine schematische Prinzipansicht des erfindungsgemäßen Tretlagergetriebes mit der der zweiten Getriebeschaltgruppe mit zwei Planetenradsätzen mit der ersten Verblockungsvariante vorgeschalteten ersten Getriebeschaltgruppe mit dem Stufenplanetenradsatz mit einer fünften Verblockungsvariante;
Figur 7 eine schematische Prinzipansicht des erfindungsgemäßen Tretlagergetriebes mit der der zweiten Getriebeschaltgruppe mit zwei Planetenradsätzen mit der ersten Verblockungsvariante vorgeschalteten ersten Getriebeschaltgruppe mit dem Stufenplanetenradsatz mit einer sechsten Verblockungsvariante;
Figur 8 eine schematische Prinzipansicht des erfindungsgemäßen Tretlagergetriebes mit der der ersten Getriebeschaltgruppe mit dem Stufenplanetenradsatz mit der ersten Verblockungsvariante nachgeschalteten zweiten Getriebeschaltgruppe mit zwei Planetenradsätzen mit einer zweiten Verblockungsvariante;
Figur 9 eine schematische Prinzipansicht des erfindungsgemäßen Tretlagergetriebes mit der der ersten Getriebeschaltgruppe mit dem Stufenplanetenradsatz mit der ersten Verblockungsvariante nachgeschalteten zweiten Getriebeschaltgruppe mit zwei Planetenradsätzen mit einer dritten Verblockungsvariante;
Figur 10 eine schematische Prinzipansicht des erfindungsgemäßen Tretlagergetriebes mit der der ersten Getriebeschaltgruppe mit dem Stufenplanetenradsatz mit der ersten Verblockungsvariante nachgeschalteten zweiten Getriebeschaltgruppe mit zwei Planetenradsätzen mit einer vierten Verblockungsvariante;
Figur 11 eine schematische Prinzipansicht des erfindungsgemäßen Tretlagergetriebes mit der der ersten Getriebeschaltgruppe mit dem Stufenplanetenradsatz mit der ersten Verblockungsvariante nachgeschalteten zweiten Getriebeschaltgruppe mit zwei Planetenradsätzen mit einer fünften Verblockungsvariante;
Figur 12 eine schematische Prinzipansicht des erfindungsgemäßen Tretlagergetriebes mit der der ersten Getriebeschaltgruppe mit dem Stufenplanetenradsatz mit der ersten Verblockungsvariante nachgeschalteten zweiten Getriebeschaltgruppe mit zwei Planetenradsätzen mit einer sechsten Verblockungsvariante;
Figur 13 eine schematische Prinzipansicht des erfindungsgemäßen Tretlagergetriebes mit der der zweiten Getriebeschaltgruppe nachgeschalteten ersten Getriebeschaltgruppe mit gespiegelt dargestellten Stufenplaneten des Stufenplanetenradsatzes;
Figur 14 ein Schaltschema mit neun schaltbaren Gängen des Tretlagergetriebes;
Figur 15 eine schematische Prinzipansicht des Tretlagergetriebes gemäß Figur 1 mit einem beispielhaft angedeuteten Drehmomentsensor am Antrieb;
Figur 16 eine schematische Prinzipansicht des Tretlagergetriebes gemäß Figur 15 mit einer beispielhaft am Antrieb angeordneten elektrischen Maschine;
Figur 17 eine schematische Prinzipansicht des Tretlagergetriebes gemäß Figur 15 mit einer beispielhaft am Abtrieb angeordneten elektrischen Maschine; und
Figur 18 eine schematische Prinzipansicht des Tretlagergetriebes gemäß Figur 15 mit einem Freilauf vor der Tretkurbelwelle.

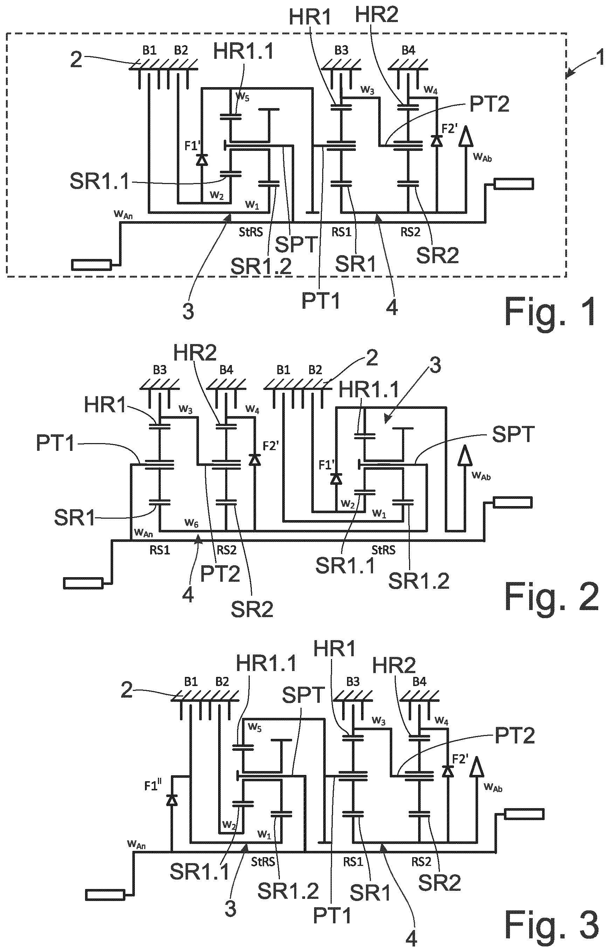

In den Figuren 1 bis 18 sind verschiedene Ausführungsvarianten und Ausführungen bzw. ein Schaltschema eines erfindungsgemäßen Tretlagergetriebes in Planetenbauweise lediglich beispielhaft dargestellt. Figur 1 zeigt exemplarisch ein nur schematisch angedeutetes Fahrrad oder Pedelec 1 mit dem Tretlagergetriebe.

Das Tretlagergetriebe ist in einem Gehäuse bzw. Tretlagergehäuse 2 mit einer Tretkurbel mit Pedalen als Tretkurbelwelle WAn dargestellt, wobei die Tretkurbelwelle WAn eingangsseitig mit einer der Getriebeschaltgruppen 3, 4 verbunden ist. Ferner umfasst das Tretlagergetriebe eine Getriebeausgangswelle WAb als Abtrieb mit einem nicht weiter dargestellten Ketten- bzw. Riemenrad, welches ausgangsseitig mit einer der Getriebeschaltgruppen 3, 4 verbunden ist. Das Tretlagergetriebe umfasst eine mehrgängige erste Getriebeschaltgruppe 3 und eine mehrgängige zweite Getriebeschaltgruppe 4, wobei die erste Getriebeschaltgruppe 3 einen zweistufigen Stufenplanetenradsatzes StRS aufweist, dem ein erstes Schaltelemente B1 als formschlüssige Bremse, ein zweites Schaltelement B2 als formschlüssige Bremse und ein fünftes Schaltelement F1', F1", F1^{III}, F1^{IV}, F1^{V}, F1^{VI} als Freilauf zugeordnet sind, und wobei die zweite Getriebeschaltgruppe 4 einen ersten Planetenradsatzes RS1 und einen zweiten Planetenradsatzes RS2 aufweist, denen ein drittes Schaltelement B3 als formschlüssige Bremse, ein viertes Schaltelement B4 als formschlüssige Bremse und ein sechstes Schaltelement F2^{I}, F2", F2^{III}, F2^{IV}, F2^{V}, F2^{VI} als Freilauf zugeordnet sind. Die beiden Getriebeschaltgruppen 3, 4 bilden quasi zwei Teilgetriebe, die in Bezug auf die Kraftflussrichtung zwischen Tretkurbelwelle WAn und Getriebeausgangswelle WAb in beliebiger Reihenfolge miteinander verschaltet werden können.

Unabhängig von den jeweiligen Ausführungsvarianten ist bei dem Tretlagergetriebe vorgesehen, dass ein Stufenplanetenradträger SPT als Element des Stufenplanetenradsatzes StRS1 mit der Tretkurbelwelle WAn oder mit einer sechsten Welle W6 als Ausgangswelle der zweiten Getriebeschaltgruppe 4 verbunden ist, dass ein Hohlrad HR1.1 als Element des Stufenplanetenradsatzes StRS mit einem zweiten Element des ersten Planetenradsatzes RS1 oder mit der Getriebeausgangswelle WAb verbunden ist, dass ein zweites Sonnenrad SR1.2 als Element des Stufenplanetenradsatzes StRS über ein erstes Schaltelement B1 an einem Gehäuse 2 bzw. an einem stationären Bauteil oder dergleichen festsetzbar ist, dass ein erstes Sonnenrad SR1.1 als Element des Stufenplanetenradsatzes StRS über ein zweites Schaltelement B2 an dem Gehäuse 2 festsetzbar ist, dass zum Verblocken des Stufenplanetenradsatzes StRS zwei Elemente des Stufenplanetenradsatzes StRS über ein fünftes Schaltelement F1^{I}, F1", F1^{III}, F1^{IV}, F1^{V}, F1^{VI}, F1^{VII}, F1^{VIII} miteinander verbindbar sind, dass ein erstes Element des ersten Planetenradsatzes RS1 mit einem ersten Element des zweiten Planetenradsatzes RS2 verbunden ist, dass das erste Element des ersten Planetenradsatzes RS1 und das erste Element des zweiten Planetenradsatzes RS2 gemeinsam mit dem Stufenplanetenradträger SPT des Stufenplanetenradsatzes StRS oder mit der Getriebeausgangswelle WAb verbunden sind, dass ein drittes Element des ersten Planetenradsatzes RS1 über ein drittes Schaltelement B3 an dem Gehäuse 2 festsetzbar ist, dass ein drittes Element des zweiten Planetenradsatzes RS2 über ein viertes Schaltelement B4 an dem Gehäuse 2 festsetzbar ist, dass das dritte Element des ersten Planetenradsatzes RS1 mit dem zweiten Element des zweiten Planetenradsatzes RS2 verbunden ist, und dass zum Verblocken des ersten Planetenradsatzes RS1 und des zweiten Planetenradsatzes RS2 zwei mit Elementen des ersten Planetenradsatzes RS1 und des zweiten Planetenradsatzes RS2 verbundene Wellen über ein sechstes Schaltelement F2^{I}, F2^{II}, F2^{III}, F2^{IV}, F2^{V}, F2^{VI} miteinander verbindbar sind.

In den Figuren 1 bis 13 und 15 bis 18 sind die vorgesehenen Planetenradsätze RS1, RS2 jeweils als bauraumgünstige Minus-Planetenradsätze ausgeführt. Hierbei ist vorgesehen, dass jeweils als erstes Element ein Sonnenrad SR1, SR2 als zweites Element ein Steg oder Planetenradträger PT1, PT2 und als drittes Element ein Hohlrad HR1, HR2 bei den Planetenradsätzen RS1, RS2 vorgesehen sind.

In Figur 1 ist eine Ausführungsvariante des Tretlagergetriebes dargestellt, bei der die erste Getriebeschaltgruppe 3 der zweiten Getriebeschaltgruppe 4 vorgeschaltet ist. Im Detail ist bei der ersten Ausführungsvariante gemäß Figur 1 vorgesehen, dass der Stufenplanetenradträger SPT als Element des Stufenplanetenradsatzes StRS1 mit der Tretkurbelwelle WAn verbunden ist, dass das Hohlrad HR1.1 als Element des Stufenplanetenradsatzes StRS über eine fünfte Welle W5 als Eingangswelle der zweiten Getriebeschaltgruppe 4 mit dem Planetenradträger PT1 des ersten Planetenradsatzes RS1 verbunden ist, dass das zweite Sonnenrad SR1.2 als Element des Stufenplanetenradsatzes StRS über eine erste Welle W1 bei geschlossenem ersten Schaltelement B1 an dem Gehäuse 2 festsetzbar ist, dass das erste Sonnenrad SR1.1 als Element des Stufenplanetenradsatzes StRS über eine zweite Welle W2 bei geschlossenem zweiten Schaltelement B2 an dem Gehäuse 2 festsetzbar ist, dass zum Verblocken des Stufenplanetenradsatzes StRS im Rahmen einer ersten Verblockungsvariante das mit der fünften Welle W5 verbundene Hohlrad HR1.1 bei gesperrtem fünften Schaltelement F1' in einer ersten Anordnungsvariante mit dem mit der zweiten Welle W2 verbundenen ersten Sonnenrad SR1.1 des Stufenplanetenradsatzes StRS verbindbar ist, dass das Sonnenrad SR1 des ersten Planetenradsatzes RS1 mit dem Sonnenrad SR2 des zweiten Planetenradsatzes RS2 verbunden ist, dass das Sonnenrad SR1 des ersten Planetenradsatzes RS1 und das Sonnenrad SR2 des zweiten Planetenradsatzes RS2 gemeinsam mit der Getriebeausgangswelle WAb verbunden sind, dass das Hohlrad HR1 des ersten Planetenradsatzes RS1 über eine dritte Welle W3 bei geschlossenem dritten Schaltelement B3 an dem Gehäuse 2 festsetzbar ist, dass das Hohlrad HR2 des zweiten Planetenradsatzes RS2 über eine vierte Welle W4 bei geschlossenem vierten Schaltelement B4 an dem Gehäuse 2 festsetzbar ist, dass das Hohlrad HR1 des ersten Planetenradsatzes RS1 über die dritte Welle W3 mit dem Planetenradträger PT2 des zweiten Planetenradsatzes RS2 verbunden ist, und dass zum Verblocken des ersten Planetenradsatzes RS1 und des zweiten Planetenradsatzes RS2 im Rahmen einer ersten Verblockungsvariante die mit dem Hohlrad HR2 verbundene vierte Welle W4 bei gesperrtem sechsten Schaltelement F2^{I} in einer ersten Anordnungsvariante mit der mit dem ersten Sonnenrad SR1 und dem zweiten Sonnenrad SR2 verbundene Getriebeausgangswelle WAb verbindbar ist.

In Figur 2 ist eine Ausführungsvariante des Tretlagergetriebes dargestellt, bei der die erste Getriebeschaltgruppe 3 der zweiten Getriebeschaltgruppe 4 nachgeschaltet ist. Im Detail ist bei der Ausführungsvariante gemäß Figur 2 vorgesehen, dass der Stufenplanetenradträger SPT als Element des Stufenplanetenradsatzes StRS1 mit der sechsten Welle W6 als Ausgangswelle der zweiten Getriebeschaltgruppe 4 verbunden ist, dass das Hohlrad HR1.1 als Element des Stufenplanetenradsatzes StRS mit der Getriebeausgangswelle WAb verbunden ist, dass das zweite Sonnenrad SR1.2 als Element des Stufenplanetenradsatzes StRS über die erste Welle W1 bei geschlossenem ersten Schaltelement B1 an dem Gehäuse 2 festsetzbar ist, dass das erste Sonnenrad SR1.1 als Element des Stufenplanetenradsatzes StRS über die zweite Welle W2 bei geschlossenem zweiten Schaltelement B2 an dem Gehäuse 2 festsetzbar ist, dass zum Verblocken des Stufenplanetenradsatzes StRS im Rahmen einer ersten Verblockungsvariante das mit Getriebeausgangswelle WAb verbundene Hohlrad HR1.1 bei gesperrtem fünften Schaltelement F1^{I} in einer ersten Anordnungsvariante mit dem mit der zweiten Welle W2 verbundenen ersten Sonnenrad SR1.1 des Stufenplanetenradsatzes StRS verbindbar ist, dass das Sonnenrad SR1 des ersten Planetenradsatzes RS1 mit dem Sonnenrad SR2 des zweiten Planetenradsatzes RS2 verbunden ist, dass das Sonnenrad SR1 des ersten Planetenradsatzes RS1 und das Sonnenrad SR2 des zweiten Planetenradsatzes RS2 gemeinsam mit dem Stufenplanetenradträger SPT des Stufenplanetenradsatzes StRS verbunden sind, dass das Hohlrad HR1 des ersten Planetenradsatzes RS1 über die dritte Welle W3 bei geschlossenem dritten Schaltelement B3 an dem Gehäuse 2 festsetzbar ist, dass das Hohlrad HR2 des zweiten Planetenradsatzes RS2 über die vierte Welle W4 bei geschlossenem vierten Schaltelement B4 an dem Gehäuse 2 festsetzbar ist, dass das Hohlrad HR1 des ersten Planetenradsatzes RS1 über die dritte Welle W3 mit dem Planetenradträger PT2 des zweiten Planetenradsatzes RS2 verbunden ist, und dass zum Verblocken des ersten Planetenradsatzes RS1 und des zweiten Planetenradsatzes RS2 im Rahmen einer ersten Verblockungsvariante die mit dem Hohlrad HR2 verbundene vierte Welle W4 bei gesperrtem sechsten Schaltelement F2^{I} in einer ersten Anordnungsvariante mit der mit dem ersten Sonnenrad SR1 und dem zweiten Sonnenrad SR2 verbundene sechste Welle W6 verbindbar ist.

In Figur 3 wird im Unterschied zu Figur 1 eine zweite Verblockungsvariante des Stufenplanetenradsatzes StRS bei dem der zweiten Getriebeschaltgruppe 4 vorgeschalteten ersten Getriebeschaltgruppe 3 dargestellt. Im Rahmen der zweiten Verblockungsvariante wird bei gesperrtem fünften Schaltelements F1" in einer zweiten Anordnungsvariante das mit der ersten Welle W1 verbundene zweite Sonnenrad SR1.2 mit dem mit der Tretkurbelwelle WAn verbundenen Stufenplanetenradträger SPT des ersten Stufenplanetenradsatzes StR1 verbunden.

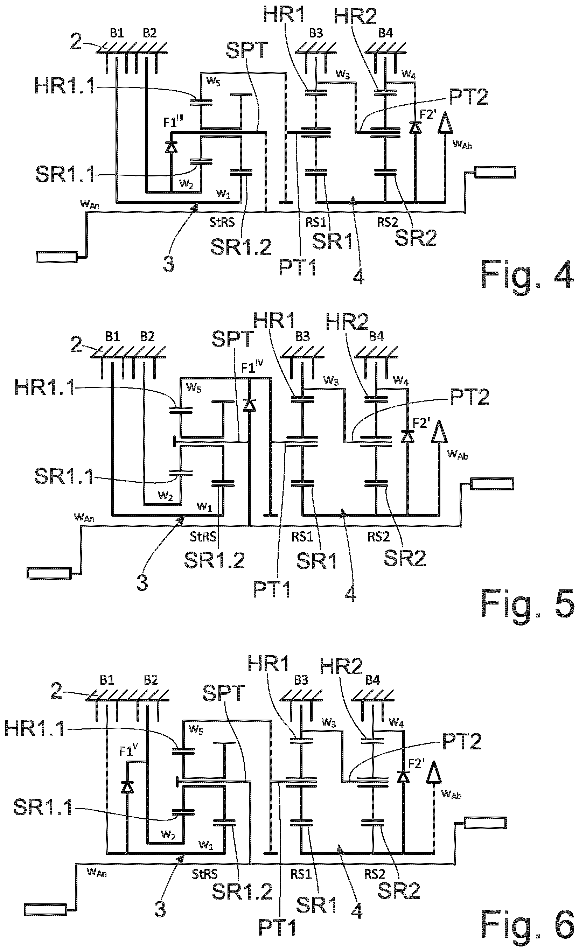

In Figur 4 wird im Unterschied zu Figur 1 eine dritte Verblockungsvariante des Stufenplanetenradsatzes StRS bei dem der zweiten Getriebeschaltgruppe 4 vorgeschalteten ersten Getriebeschaltgruppe 3 dargestellt. Im Rahmen der dritten Verblockungsvariante wird bei gesperrtem fünften Schaltelements F1^{III} in einer dritten Anordnungsvariante das mit der zweiten Welle W2 verbundene erste Sonnenrad SR1.1 mit dem mit der Tretkurbelwelle WAn verbundenen Stufenplanetenradträger SPT des ersten Stufenplanetenradsatzes StR1 verbunden.

In Figur 5 wird im Unterschied zu Figur 1 eine vierte Verblockungsvariante des Stufenplanetenradsatzes StRS bei dem der zweiten Getriebeschaltgruppe 4 vorgeschalteten ersten Getriebeschaltgruppe 3 dargestellt. Im Rahmen der vierten Verblockungsvariante wird bei gesperrtem fünften Schaltelements F1^{IV} in einer vierten Anordnungsvariante das mit der fünften Welle W5 verbundene Hohlrad HR1.1 mit dem mit der Tretkurbelwelle WAn verbundenen Stufenplanetenradträger SPT des ersten Stufenplanetenradsatzes StR1 verbunden.

In Figur 6 wird im Unterschied zu Figur 1 eine fünfte Verblockungsvariante des Stufenplanetenradsatzes StRS bei dem der zweiten Getriebeschaltgruppe 4 vorgeschalteten ersten Getriebeschaltgruppe 3 dargestellt. Im Rahmen der fünften Verblockungsvariante wird bei gesperrtem fünften Schaltelements F1^{V} in einer fünften Anordnungsvariante das mit der ersten Welle W1 verbundene zweite Sonnenrad SR1.2 mit dem mit der zweiten Welle W2 verbundene erste Sonnenrad SR1.1 des ersten Stufenplanetenradsatzes StR1 verbunden.

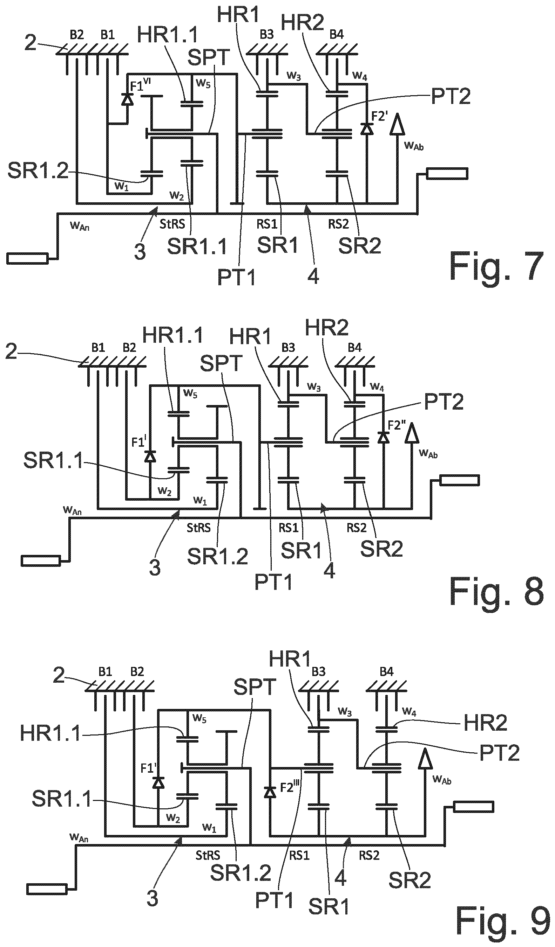

In Figur 7 wird im Unterschied zu Figur 1 eine sechste Verblockungsvariante des Stufenplanetenradsatzes StRS1 bei dem der zweiten Getriebeschaltgruppe 4 vorgeschalteten ersten Getriebeschaltgruppe 3 dargestellt. Im Rahmen der sechsten Verblockungsvariante wird bei gesperrtem fünften Schaltelements F1^{VI} in einer sechsten Anordnungsvariante das mit der ersten Welle W1 verbundene zweite Sonnenrad SR1.2 mit dem mit der fünften Welle W5 verbundene Hohlrad HR1.1 des ersten Stufenplanetenradsatzes StR1 verbunden.

In Figur 8 wird im Unterschied zu Figur 1 eine zweite Verblockungsvariante des ersten Planetenradsatzes RS1 und des zweiten Planetenradsatzes RS2 bei dem der ersten Getriebeschaltgruppe 3 nachgeschalteten zweiten Getriebeschaltgruppe 4 dargestellt. Im Rahmen der zweiten Verblockungsvariante wird bei gesperrtem sechsten Schaltelements F2" in einer zweiten Anordnungsvariante die mit dem Hohlrad HR1 des ersten Planetenradsatzes RS1 und dem Planetenradträger PT2 des zweiten Planetenradsatzes RS2 verbundene dritte Welle W3 mit der mit dem Sonnenrad SR1 des ersten Planetenradsatzes RS1 und dem Sonnenrad SR2 des zweiten Planetenradsatzes RS2 verbundenen Getriebeausgangswelle WAb verbunden.

In Figur 9 wird im Unterschied zu Figur 1 eine dritte Verblockungsvariante des ersten Planetenradsatzes RS1 und des zweiten Planetenradsatzes RS2 bei dem der ersten Getriebeschaltgruppe 3 nachgeschalteten zweiten Getriebeschaltgruppe 4 dargestellt. Im Rahmen der dritten Verblockungsvariante wird bei gesperrtem sechsten Schaltelements F2^{III} in einer dritten Anordnungsvariante die mit dem Planetenradträger PT1 des ersten Planetenradsatzes RS1 verbundene fünfte Welle W5 mit der mit dem Sonnenrad SR1 des ersten Planetenradsatzes RS1 und dem Sonnenrad SR2 des zweiten Planetenradsatzes RS2 verbundenen Getriebeausgangswelle WAb verbunden.

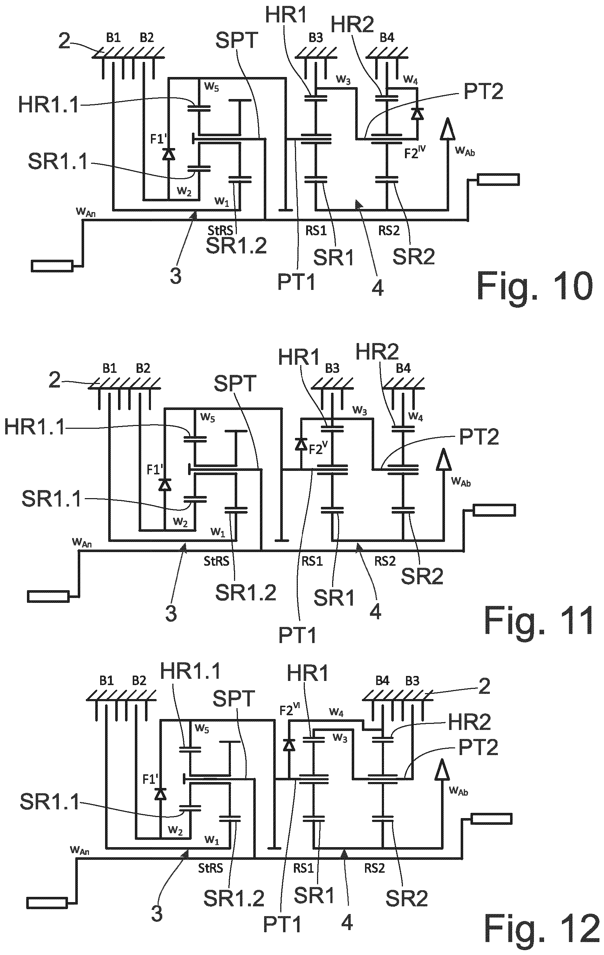

In Figur 10 wird im Unterschied zu Figur 1 eine vierte Verblockungsvariante des ersten Planetenradsatzes RS1 und des zweiten Planetenradsatzes RS2 bei dem der ersten Getriebeschaltgruppe 3 nachgeschalteten zweiten Getriebeschaltgruppe 4 dargestellt. Im Rahmen der vierten Verblockungsvariante wird bei gesperrtem sechsten Schaltelements F2^{IV} in einer vierten Anordnungsvariante die mit dem Hohlrad HR1 des ersten Planetenradsatzes RS1 und dem Planetenradträger PT2 des zweiten Planetenradsatzes RS2 verbundene dritte Welle W3 mit der mit dem Hohlrad HR2 des zweiten Planetenradsatzes RS2 verbundenen vierten Welle W4 verbunden.

In Figur 11 wird im Unterschied zu Figur 1 eine fünfte Verblockungsvariante des ersten Planetenradsatzes RS1 und des zweiten Planetenradsatzes RS2 bei dem der ersten Getriebeschaltgruppe 3 nachgeschalteten zweiten Getriebeschaltgruppe 4 dargestellt. Im Rahmen der fünften Verblockungsvariante wird bei gesperrtem sechsten Schaltelements F2^{V} in einer fünften Anordnungsvariante die mit dem Hohlrad HR1 des ersten Planetenradsatzes RS1 und dem Planetenradträger PT2 des zweiten Planetenradsatzes RS2 verbundene dritte Welle W3 mit der mit dem Planetenradträger PT1 des ersten Planetenradsatzes RS1 verbundenen fünften Welle W5 verbunden.

In Figur 12 wird im Unterschied zu Figur 1 eine sechste Verblockungsvariante des ersten Planetenradsatzes RS1 und des zweiten Planetenradsatzes RS2 bei dem der ersten Getriebeschaltgruppe 3 nachgeschalteten zweiten Getriebeschaltgruppe 4 dargestellt. Im Rahmen der sechsten Verblockungsvariante wird bei gesperrtem sechsten Schaltelements F2^{VI} in einer sechsten Anordnungsvariante die mit dem Hohlrad HR2 des zweiten Planetenradsatzes RS2 vierte Welle W4 mit der mit dem Planetenradträger PT1 des ersten Planetenradsatzes RS1 verbundenen fünften Welle W5 verbunden.

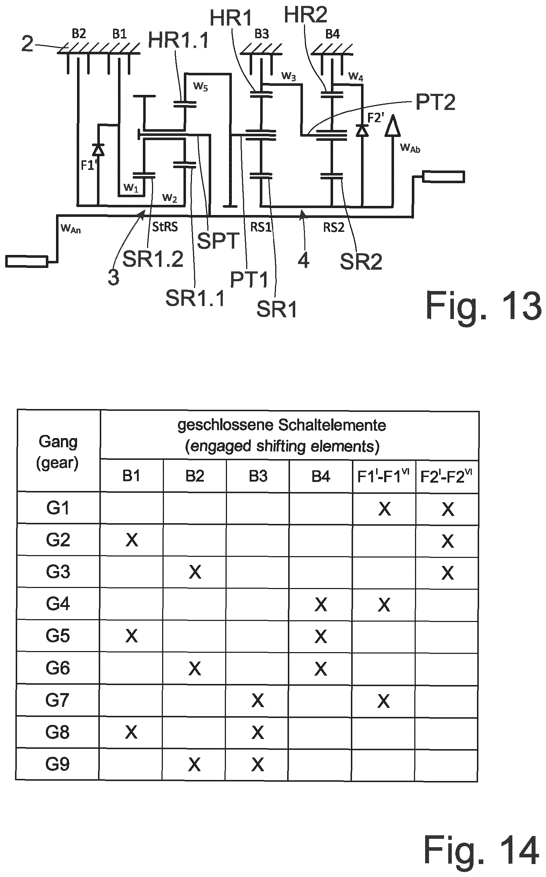

In Figur 13 ist anhand der Ausführung gemäß Figur 1 ein gespiegelter Stufenplanet geht bei dem Stufenplanetenradsatzes StRS dargestellt, bei dem die beiden Stufen des Stufenplaneten axial vertauscht sind. Dies bedeutet, dass axial gesehen das zweite Sonnenrad SR1.2 in der ersten Ebene und das erste Sonnenrad SR1.1 mit dem Hohlrad HR1.1 in der zweiten Ebene angeordnet sind.

In Figur 14 ist ein Schaltschema für das Tretlagergetriebe mit der ersten Getriebeschaltgruppe 3 als Dreiganggetriebe und mit der zweiten Getriebeschaltgruppe 4 als Dreiganggetriebe dargestellt. Hieraus ergibt sich, dass 3 x 3 also neun Gänge G1, G2, G3, G4, G5, G6, G7, G8, G9 realisierbar sind. In dem Schaltschema sind die für den jeweiligen Gang G1, G2, G3, G4, G5, G6, G7, G8, G9 verwendeten Schaltelemente B1, B2, B3, B4, F1^{I}, F1^{II}, F1^{II}, F1^{IV} , F1^{V}, F1^{VI}, F2', F2^{II}, F2^{III}, F2^{IV}, F2^{V}, F2^{VI}, angegeben. Hierbei bedeutet ein X bei den Freiläufen F1', F1", F1^{III}, F1^{IV}, F1^{V}, F1^{VI}, F2^{I}, F2", F2^{III}, F2^{IV}, F2^{V}, F2^{VI} als Schaltelemente in dem Schaltschema, dass die Freiläufe sperren. Dies funktioniert selbsttätig ohne äußere Betätigung. Ferner bedeutet ein X bei einer Bremse B1, B2, B3, B4 als Schaltelement in dem Schaltschema, dass die Bremsen B1, B2, B3, B4 geschlossen sind. Dies funktioniert über eine geeignete Aktuatorik. Ein leeres Feld bei den Freiläufen F1^{I}, F1", F1^{III}, F1^{IV}, F1^{V}, F1^{VI}, F2', F2", F2^{III}, F2^{IV}, F2^{V}, F2^{VI} bedeutet, dass diese nicht sperren. Ein leeres Feld bei den Bremsen B1, B2, B3, B4 bedeutet, dass diese geöffnet sind.

Im Einzelnen ergibt sich aus dem Schaltschema gemäß Figur 14, dass zum Realisieren oder Schalten eines ersten Ganges G1 das fünfte als Freilauf ausgeführte Schaltelement F1', F1", F1^{III}, F1^{IV}, F1^{V}, F1^{VI} und das sechste als Freilauf ausgeführte Schaltelement F2^{I}, F2", F2^{III}, F2^{IV}, F2^{V}, F2^{VI} sperren, dass zum Realisieren eines zweiten Ganges G2 das erste als Bremse ausgeführte Schaltelement B1 geschlossen ist und das sechste als Freilauf ausgeführte Schaltelement F2^{I}, F2", F2^{III}, F2^{IV}, F2^{V}, F2^{VI} sperrt, dass zum Realisieren eines dritten Ganges G3 das zweite als Bremse ausgeführte Schaltelement B2 geschlossen ist und das sechste als Freilauf ausgeführte Schaltelement F2^{I}, F2", F2^{III}, F2^{IV}, F2^{V}, F2^{VI} sperrt, dass zum Realisieren eines vierten Ganges G4 das vierte als Bremse ausgeführte Schaltelement B4 geschlossen ist und das fünfte als Freilauf ausgeführte Schaltelement F1', F1", F1^{III}, F1^{IV}, F1^{V}, F1^{VI} sperrt, dass zum Realisieren eines fünften Ganges G5 das erste als Bremse ausgeführte Schaltelement B1 und das vierte als Bremse ausgeführte Schaltelement B4 geschlossen sind, dass zum Realisieren eines sechsten Ganges G6 das zweite als Bremse ausgeführte Schaltelement B2 und das vierte als Bremse ausgeführte Schaltelement B4 geschlossen sind, dass zum Realisieren eines siebenten Ganges G7 das dritte als Bremse ausgeführte Schaltelement B3 geschlossen ist und das fünfte als Freilauf ausgeführte Schaltelement F1', F1", F1^{III}, F1^{IV}, F1^{V}, F1^{VI} sperrt, dass zum Realisieren eines achten Ganges G8 das erste als Bremse ausgeführte Schaltelement B1 und das dritte als Bremse ausgeführte Schaltelement B3 geschlossen sind, und/oder dass zum Realisieren eines neunten Ganges G9 das zweite als Bremse ausgeführte Schaltelement B2 und das dritte als Bremse ausgeführte Schaltelement B3 geschlossen sind.

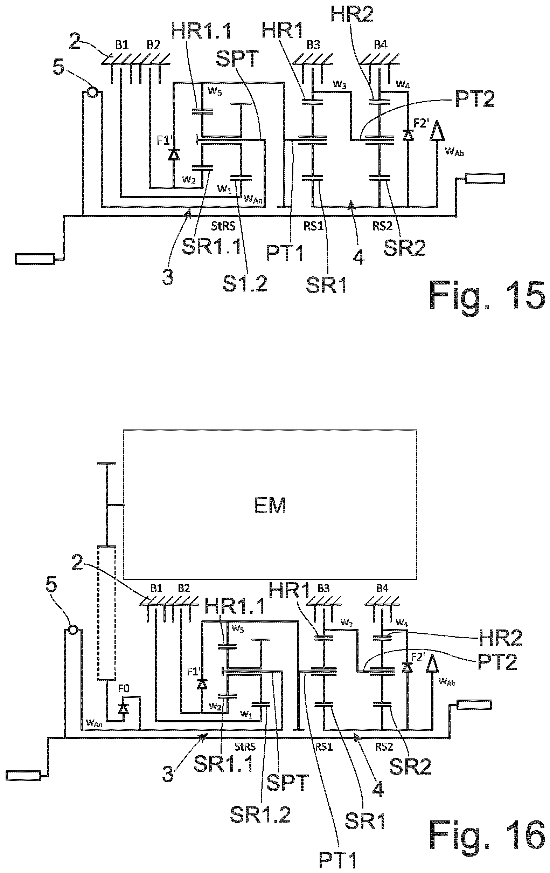

In Figur 15 ist eine Ausführung des erfindungsgemäßen Tretlagergetriebes anhand Figur 1 gezeigt, bei der ein Drehmomentsensor 5 mit der Tretkurbelwelle bzw. mit der Getriebeeingangswelle WAn verbunden bzw. verbindbar ist. Beispielsweise kann ein scheibenförmiger Drehmomentsensor 5 am Getriebeeingang angeordnet werden. Der Drehmomentsensor 5 kann jedoch auch auf andere Art und Weise ausgeführt werden.

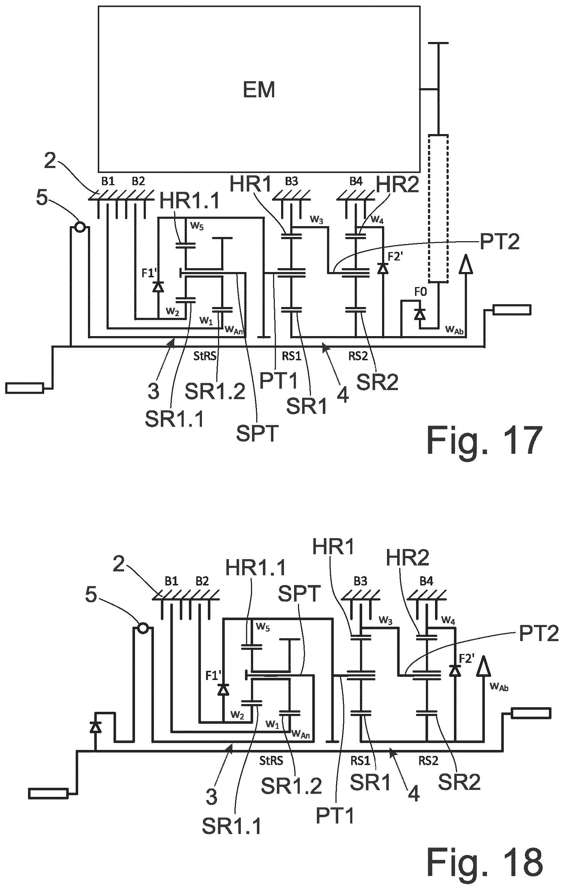

In den Figuren 16 und 17 ist jeweils eine Ausführung des erfindungsgemäßen Tretlagergetriebes anhand Figur 15 mit einer zusätzlichen elektrischen Maschine EM dargestellt. Die elektrische Maschine EM kann an der Tretkurbelwelle WAn angebunden werden, wie dies in Figur 16 angedeutet ist. Es ist auch denkbar, dass die elektrische Maschine EM an der Getriebeausgangswelle WAb angebunden wird, wie dies in Figur 17 gezeigt ist. Die elektrische Maschine EM ist vorzugsweise achsparallel zur Tretkurbelwelle bzw. Getriebeeingangswelle WAn angeordnet. Es wäre jedoch auch eine koaxiale Anordnung der elektrischen Maschine EM zur Tretkurbelwelle möglich. Unabhängig, davon ist es vorteilhaft, die elektrische Maschine EM über einen Freilauf F0 oder dergleichen anzubinden, damit beim Betrieb ohne die elektrische Maschine EM keine Verluste durch die mitdrehende elektrische Maschine EM verursacht werden.

In Figur 18 ist eine Ausführung des erfindungsgemäßen Tretlagergetriebes anhand Figur 15 mit einem zusätzlichen Freilauf F zwischen der Tretkurbel und dem Getriebeeingang des Tretlagergetriebes dargestellt. Auf diese Weise kann bei Tretunterbrechung der Freilauf öffnen und entkoppelt die Tretkurbel von den Trägheitsmassen des Getrieberadsatzes und insbesondere der elektrischen Maschine EM, sodass am Pedal keine Massenkräfte spürbar sind.

### Bezugszeichen

- 1: Fahrrad oder Pedelec
- 2: Gehäuse bzw. Tretlagergehäuse
- 3: erste Getriebeschaltgruppe
- 4: zweite Getriebeschaltgruppe
- 5: Drehmomentsensor
- EM: elektrische Maschine
- F0: Freilauf für elektrische Maschine
- F: zusätzlicher Freilauf
- SR1: Sonnenrad des ersten Planetenradsatzes
- PT1: Planetenradträger des ersten Planetenradsatzes
- HR1: Hohlrad des ersten Planetenradsatzes
- SR2: Sonnenrad des zweiten Planetenradsatzes
- PT2: Planetenradträger des zweiten Planetenradsatzes
- HR2: Hohlrad des zweiten Planetenradsatzes
- SR1.1: erstes Sonnenrad mit kleinere Zähnezahl des Stufenplanetenradsatzes
- SR1.2: zweites Sonnenrad mit größerer Zähnezahl des Stufenplanetenradsatzes
- HR1.1: Hohlrad des Stufenplanetenradsatzes
- SPT: Stufenplanetenradträger des Stufenplanetenradsatzes
- RS1: erster Planetenradsatz
- RS2: zweiter Planetenradsatz
- StRS: Stufenplanetenradsatz
- WAn: Getriebeeingangswelle bzw. Tretkurbelwelle
- WAb: Getriebeausgangswelle
- W1: erste Welle
- W2: zweite Welle
- W3: dritte Welle
- W4: vierte Welle
- W5: fünfte Welle
- W6: sechste Welle
- G1: erster Gang
- G2: zweiter Gang
- G3: dritter Gang
- G4: vierter Gang
- G5: fünfter Gang
- G6: sechster Gang
- G7: siebenter Gang
- G8: achter Gang
- G9: neunter Gang
- B1: erstes als Bremse ausgeführtes Schaltelement
- B2: zweites als Bremse ausgeführtes Schaltelement
- B3: drittes als Bremse ausgeführtes Schaltelement
- B4: viertes als Bremse ausgeführtes Schaltelement
- F1': fünftes als Freilauf ausgeführtes Schaltelement in einer ersten Anordnungsposition
- F1": fünftes als Freilauf ausgeführtes Schaltelement in einer zweiten Anordnungsposition
- F1^{III}: fünftes als Freilauf ausgeführtes Schaltelement in einer dritten Anordnungsposition
- F1^{IV}: fünftes als Freilauf ausgeführtes Schaltelement in einer vierten Anordnungsposition
- F1^{V}: fünftes als Freilauf ausgeführtes Schaltelement in einer fünften Anordnungsposition
- F1^{VI}: fünftes als Freilauf ausgeführtes Schaltelement in einer sechsten Anordnungsposition
- F2^{I}: sechstes als Freilauf ausgeführtes Schaltelement in einer ersten Anordnungsposition
- F2": sechstes als Freilauf ausgeführtes Schaltelement in einer zweiten Anordnungsposition
- F2^{III}: sechstes als Freilauf ausgeführtes Schaltelement in einer dritten Anordnungsposition
- F2^{IV}: sechstes als Freilauf ausgeführtes Schaltelement in einer vierten Anordnungsposition
- F2^{V}: sechstes als Freilauf ausgeführtes Schaltelement in einer fünften Anordnungsposition
- F2^{VI}: sechstes als Freilauf ausgeführtes Schaltelement in einer sechsten Anordnungsposition

## Patentansprüche

1. Tretlagergetriebe in Planetenbauweise für ein Fahrrad oder ein Pedelec (1), mit einer Tretkurbelwelle (WAn) als Antrieb und einer Getriebeausgangswelle (WAb) als Abtrieb und mit weiteren Wellen (W1, W2, W3, W4, W5, W6) sowie mit einer ersten Getriebeschaltgruppe (3) und einer zweiten Getriebeschaltgruppe (4), die zum Realisieren von mehreren Gängen (G1, G2, G3, G4, G5, G6, G7, G8, G9, G10, G11, G12) miteinander gekoppelt sind, wobei die erste Getriebeschaltgruppe (3) einen zweistufigen Stufenplanetenradsatz (StRS) umfasst, dem ein erstes Schaltelement Schaltelemente (B1), ein zweites Schaltelement (B2) und ein fünftes Schaltelement (F1^{I}, F1^{II}, F1^{III}, F1^{IV}, F1^{V}, F1^{VI}) zugeordnet sind, wobei die zweite Getriebeschaltgruppe (4) einen ersten Planetenradsatzes (RS1) und einen zweiten Planetenradsatzes (RS2) umfasst, denen ein drittes Schaltelement (B3), ein viertes Schaltelement (B4) und einen sechste Schaltelement (F2^{I}, F2", F2^{III}, F2^{IV}, F2^{V}, F2^{VI}) zugeordnet sind, wobei ein Stufenplanetenradträger (SPT) als Element des Stufenplanetenradsatzes (StRS1) mit der Tretkurbelwelle (WAn) oder mit einer sechsten Welle (W6) als Ausgangswelle der zweiten Getriebeschaltgruppe (4) verbunden ist, wobei ein Hohlrad (HR1.1) als Element des Stufenplanetenradsatzes (StRS) mit einem zweiten Element des ersten Planetenradsatzes (RS1) oder mit der Getriebeausgangswelle (WAb) verbunden ist, wobei ein zweites Sonnenrad (SR1.2) als Element des Stufenplanetenradsatzes (StRS) über ein erstes Schaltelement (B1) an einem Gehäuse (2) festsetzbar ist, wobei ein erstes Sonnenrad (SR1.1) als Element des Stufenplanetenradsatzes (StRS) über ein zweites Schaltelement (B2) an dem Gehäuse (2) festsetzbar ist, wobei zum Verblocken des Stufenplanetenradsatzes (StRS) zwei Elemente des Stufenplanetenradsatzes (StRS) über ein fünftes Schaltelement (F1^{I}, F1", F1^{III}, F1^{IV}, F1^{V}, F1^{VI}) miteinander verbindbar sind, wobei ein erstes Element des ersten Planetenradsatzes (RS1) mit einem ersten Element des zweiten Planetenradsatzes (RS2) verbunden ist, wobei das erste Element des ersten Planetenradsatzes (RS1) und das erste Element des zweiten Planetenradsatzes (RS2) gemeinsam mit dem Stufenplanetenradträger (SPT) des Stufenplanetenradsatzes (StRS) oder mit der Getriebeausgangswelle (WAb) verbunden sind, wobei ein drittes Element des ersten Planetenradsatzes (RS1) über ein drittes Schaltelement (B3) an dem Gehäuse (2) festsetzbar ist, wobei ein drittes Element des zweiten Planetenradsatzes (RS2) über ein viertes Schaltelement (B4) an dem Gehäuse (2) festsetzbar ist, wobei das dritte Element des ersten Planetenradsatzes (RS1) mit dem zweiten Element des zweiten Planetenradsatzes (RS2) verbunden ist, und wobei zum Verblocken des ersten Planetenradsatzes (RS1) und des zweiten Planetenradsatzes (RS2) zwei mit Elementen des ersten Planetenradsatzes (RS1) und des zweiten Planetenradsatzes (RS2) verbundene Wellen über ein sechstes Schaltelement (F2^{I}, F2", F2^{III}, F2^{IV}, F2^{V}, F2^{VI}) miteinander verbindbar sind.

2. Tretlagergetriebe nach Anspruch 1, **dadurch gekennzeichnet, dass** die erste Getriebeschaltgruppe (3) der zweiten Getriebeschaltgruppe (4) vorgeschaltet oder nachgeschaltet ist.

3. Tretlagergetriebe nach Anspruch 1 oder 2, **dadurch gekennzeichnet, dass** der Stufenplanetenradträger (SPT) als Element des Stufenplanetenradsatzes (StRS1) mit der Tretkurbelwelle (WAn) oder mit der sechsten Welle (W6) als Ausgangswelle der zweiten Getriebeschaltgruppe (4) verbunden ist, dass das Hohlrad (HR1.1) als Element des Stufenplanetenradsatzes (StRS) über eine fünfte Welle (W5) mit dem zweiten Element des ersten Planetenradsatzes (RS1) oder mit der Getriebeausgangswelle (WAb) verbunden ist, dass das zweite Sonnenrad (SR1.2) als Element des Stufenplanetenradsatzes (StRS) über eine erste Welle (W1) bei geschlossenem ersten Schaltelement (B1) an einem Gehäuse (2) festsetzbar ist, dass das erste Sonnenrad (SR1.1) als Element des Stufenplanetenradsatzes (StRS) über eine zweite Welle (W2) bei geschlossenem zweiten Schaltelement (B2) an dem Gehäuse (2) festsetzbar ist, dass zum Verblocken des Stufenplanetenradsatzes (StRS) zwei Elemente des Stufenplanetenradsatzes (StRS) bei gesperrtem fünften Schaltelement (F1', F1^{II}, F1^{III}, F1^{IV}, F1^{V}, F1^{VI}) miteinander verbindbar sind, dass das erste Element des ersten Planetenradsatzes (RS1) mit dem ersten Element des zweiten Planetenradsatzes (RS2) verbunden ist, dass das erste Element des ersten Planetenradsatzes (RS1) und das erste Element des zweiten Planetenradsatzes (RS2) gemeinsam mit dem Stufenplanetenradträger (SPT) des Stufenplanetenradsatzes (StRS) oder mit der Getriebeausgangswelle (WAb) verbunden sind, dass das dritte Element des ersten Planetenradsatzes (RS1) über eine dritte Welle (W3) bei geschlossenem dritten Schaltelement (B3) an dem Gehäuse (2) festsetzbar ist, dass das dritte Element des zweiten Planetenradsatzes (RS2) über eine vierte Welle (W4) bei geschlossenem vierten Schaltelement (B4) an dem Gehäuse (2) festsetzbar ist, dass das dritte Element des ersten Planetenradsatzes (RS1) über die dritte Welle (W3) mit dem zweiten Element des zweiten Planetenradsatzes (RS2) verbunden ist, und dass zum Verblocken des ersten Planetenradsatzes (RS1) und des zweiten Planetenradsatzes (RS2) zwei mit Elementen des ersten Planetenradsatzes (RS1) und des zweiten Planetenradsatzes (RS2) verbundene Wellen ( WAb, W3, W4, W5) bei gesperrtem sechsten Schaltelement (F2^{I}, F2", F2^{III}, F2^{IV}, F2^{V}, F2^{VI}) miteinander verbindbar sind.

4. Tretlagergetriebe nach einem der vorangehenden Ansprüche, **dadurch gekennzeichnet, dass** das erste Schaltelement (B1), das zweite Schaltelement (B2), das dritte Schaltelement (B3) und das vierte Schaltelement (B4) jeweils als formschlüssige Bremse ausgeführt sind, und/oder dass das fünfte Schaltelement (F1', F1", F1^{III}, F1^{IV}, F1^{V}, F1^{VI}) und das sechste Schaltelement (F2^{I}, F2", F2^{III}, F2^{IV}, F2^{V}, F2^{VI}) jeweils als Freilauf ausgeführt sind.

5. Tretlagergetriebe nach einem der vorangehenden Ansprüche, **dadurch gekennzeichnet, dass** der erste Planetenradsatz (RS1) und/oder der zweite Planetenradsatz (RS2) jeweils als Minus-Planetenradsatz ausgeführt sind.

6. Tretlagergetriebe nach Anspruch 5, **dadurch gekennzeichnet, dass** bei einem Minus-Planetenradsatz das erste Element als Sonnenrad (SR1, SR2), das zweite Element als Planetenradträger (PT1, PT2) und das dritte Element als Hohlrad (HR1, HR2) ausgeführt sind.

7. Tretlagergetriebe nach einem der vorangehenden Ansprüche, **dadurch gekennzeichnet, dass** der erste Planetenradsatz (RS1) und/oder der zweite Planetenradsatz (RS2) jeweils als Plus-Planetenradsatz ausgeführt sind.

8. Tretlagergetriebe nach Anspruch 7, **dadurch gekennzeichnet, dass** bei einem Plus-Planetenradsatz das erste Element als Sonnenrad (SR1, SR2), das zweite Element als Hohlrad (HR1, HR2) und das dritte Element als Planetenradträger (PT1, PT2) ausgeführt sind.

9. Tretlagergetriebe nach einem der vorangehenden Ansprüche, **dadurch gekennzeichnet, dass** ein Drehmomentsensor (5) mit der Tretkurbelwelle (WAn) verbunden ist.

10. Tretlagergetriebe nach einem der vorangehenden Ansprüche, **dadurch gekennzeichnet, dass** zumindest eine elektrische Maschine (EM) mit der Tretkurbelwelle (WAn) oder mit der Getriebeausgangswelle (WAb) verbunden oder verbindbar ist.

11. Tretlagergetriebe nach Anspruch 10, **dadurch gekennzeichnet, dass** die elektrische Maschine (EM) achsparallel zur Tretkurbelwelle (WAn) angeordnet ist.

12. Tretlagergetriebe nach einem der vorangehenden Ansprüche, **dadurch gekennzeichnet, dass** zum Realisieren oder Schalten eines ersten Ganges (G1) das fünfte als Freilauf ausgeführte Schaltelement (F1', F1", F1^{III}, F1^{IV}, F1^{V}, F1^{II}) und das sechste als Freilauf ausgeführte Schaltelement (F2^{I}, F2", F2^{III}, F2^{IV}, F2^{V}, F2^{VI})sperren, dass zum Realisieren eines zweiten Ganges (G2) das erste als Bremse ausgeführte Schaltelement (B1) geschlossen ist und das sechste als Freilauf ausgeführte Schaltelement (F2^{I}, F2", F2^{III}, F2^{IV}, F2^{V}, F2^{VI}) sperrt, dass zum Realisieren eines dritten Ganges (G3) das zweite als Bremse ausgeführte Schaltelement (B2) geschlossen ist und das sechste als Freilauf ausgeführte Schaltelement (F2^{I}, F2", F2^{III}, F2^{IV}, F2^{V}, F2^{VI}) sperrt, dass zum Realisieren eines vierten Ganges (G4) das vierte als Bremse ausgeführte Schaltelement (B4) geschlossen ist und das fünfte als Freilauf ausgeführte Schaltelement (F1^{I}, F1", F1^{III}, F1^{IV}, F1^{V}, F1^{VI}) sperrt, dass zum Realisieren eines fünften Ganges (G5) das erste als Bremse ausgeführte Schaltelement (B1) und das vierte als Bremse ausgeführte Schaltelement (B4) geschlossen sind, dass zum Realisieren eines sechsten Ganges (G6) das zweite als Bremse ausgeführte Schaltelement (B2) und das vierte als Bremse ausgeführte Schaltelement (B4) geschlossen sind, dass zum Realisieren eines siebenten Ganges (G7) das dritte als Bremse ausgeführte Schaltelement (B3) geschlossen ist und das fünfte als Freilauf ausgeführte Schaltelement (F1^{I}, F1", F1^{III}, F1^{IV}, F1^{V}, F1^{VI}) sperrt, dass zum Realisieren eines achten Ganges (G8) das erste als Bremse ausgeführte Schaltelement (B1) und das dritte als Bremse ausgeführte Schaltelement (B3) geschlossen sind, und/oder dass zum Realisieren eines neunten Ganges (G9) das zweite als Bremse ausgeführte Schaltelement (B2) und das dritte als Bremse ausgeführte Schaltelement (B3) geschlossen sind.

13. Fahrrad oder Pedelec (1) mit dem Tretlagergetriebe nach einem der vorangehenden Ansprüche.
